# EUROPEAN PATENT APPLICATION

(11) **EP 1 092 617 A1**
(43) Date of publication of application: **18.04.2001**
(21) Application number: 99118215.5
(22) Date of filing: 14.09.1999
(51) Int. Cl.: B62M 3/00, B62M 3/08, B60B 27/02, F16C 23/08

(54) **Self-aligning bearing assembly for a bicycle**

(71) Applicant: Chuang, William, Shulin Chen, Taipei Hsien (TW)
(72) Inventor: Chuang, William, Shulin Chen, Taipei Hsien (TW)
(74) Representative: Schmitt, Armand

(57) **Abstract**

A self-aligning bearing assembly for a bicycle includes an axle (20a), a hub (10a) with a bore through which the axle (20a) extends, two bearing cups (12a) fitted over the axle (20a) and in respective ends of the bore to communicate therewith, two sets of ball bearings (30a) received in a respective one of the bearing cups (12a). two cones (26a) urging against a respective set of the ball bearings (30a), and two lock nuts respectively urging against one of the two cones (26a). The bearing cups (12a) each have an arcuate inner surface against which the ball bearings (30a) abut whereby misalignment between the bearing cups is neutralized.

## Description

### Field of the Invention

The present invention relates to a bearing assembly for a bicycle, and more particularly, a self-aligning bearing assembly for a bicycle to avoid excessive wear and friction through misalignment.

### Description of Related Art

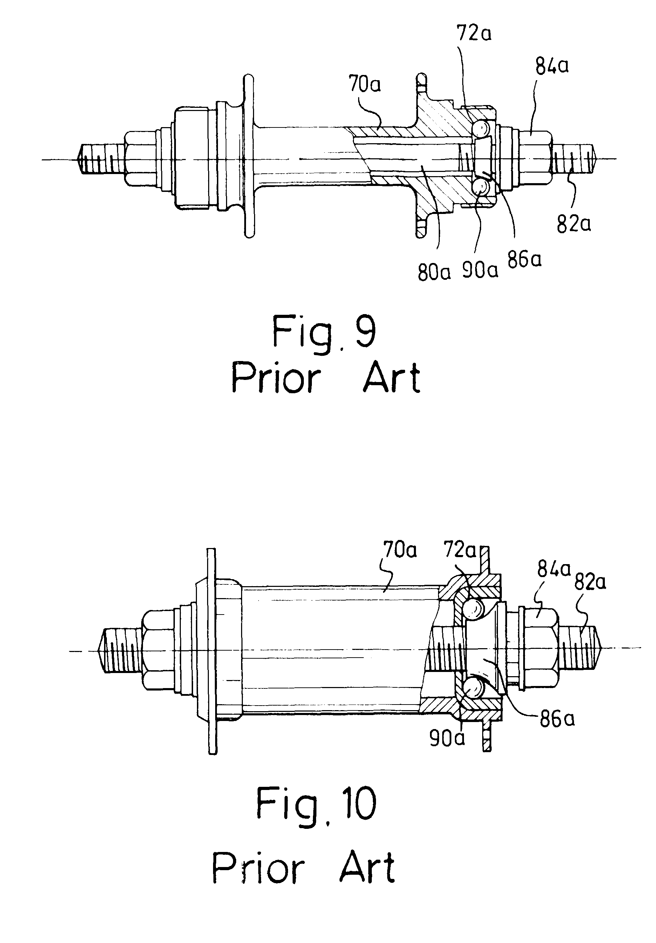

Figures 9 and 10 show bearing assemblies of a conventional wheel hub of a bicycle. The bearing assemblies are identical other than Figure 9 showing one where bearing cups are an integral part of the hub and Figure 10 shows one wherein bearing cups are formed separate from the hub and then fitted thereto. Each wheel hub includes two identical bearing units so only one will he described in detail. In Figure 9, a hub (70a) defines a bore therein and through which an axle (80a) is rotatably received. A bearing cup (72a) is defined in a distal end of the hub (70a) and in communication with the bore. The bearing cup (72a) includes an end face which is flat, and a circular wall perpendicularly joined to the end face by a radius extending therebetween. The axle (80a) has two identical threaded distal ends (82) for securement to the hub (70a) and only details of one end will be disclosed here. A plurality of ball bearings (90a) is received in the bearing cup (72a) and each ball bearing (90a) is in rolling contact with the radius and nominal portions of the end face and the circular wall. A cone (86a) is threadedly received on the axle (80a) and urges against the plurality of ball bearings (90a) whereby the ball bearings (90a) are held in position. A locknut is threadedly received on the axle (80a) to urge against the cone (86a) whereby the locknut and the cone (86a) are secured on the axle (80a) at a desired location. Part of the frame of the bicycle (not shown) is clamped between the locknut and an axle nut (84a). The hub (70a) can rotate about the axle (80a) which is fixed in place on the frame of the bicycle.
In Figure 10, a hub (70b), an axle (80b), a bearing cup (72b), a plurality of ball bearings (90b), a cone (86b), a locknut, and an axle nut (84b) are assembled in a manner identical to that shown in Fig. 9.

Figures 15 a, b, c, show ill-fitting bearing bearing cups (72) and ball bearings (90). Figure 15a shows bearing cups (72) with offset axes. Figure 15b shows bearing cups (72) with non-parallel end faces. Figure 15c shows bearing cups (72) with offset axes and non-parallel end faces. The situations shown in Figs.15 a, b, c, are commonly found in bicycles due to imperfections in machining and fitting of bearing cups, and such situations lead to excessive, early wear of hub assemblies, as well as inferior performance of the bicycle. The abutment of the ball bearings against nominal portions of the end face and the circular wall restricts adaption to overcome the mis-alignment. Thus, there has been a long and unfulfilled need for a self-aligning bearing assembly for a bicycle.

The invention provides a self-aligning bearing assembly for a bicycle, comprising an axle rotatably received in a bore, two bearing cups each with an arcuate inner face and respectively provided at opposed ends of the bore, two cones secured on the axle and corresponding to the bearing cups, and two sets of ball bearings respectively provided between matched pairs of the bearing cups and cones, whereby the axle self-aligns to a best operating condition.

Other objects, advantages and novel features of the invention will become more apparent from the following detailed description when taken in conjunction with the accompanying drawings.

In the drawings:
Fig. 1 is a side view in partial section of a first embodiment of a self-aligning bearing asembly in accordance with the present invention ;
Fig. 2 is a side view in partial section of a second embodiment of the self-aligning bearing assembly in accordance with the present invention;
Fig. 3 is a schematic view of a pair of bearing cups and a cone mated to one bearing cup of the self-aligning bearing assembly in accordance with the present invention;
Fig. 4 is a schematic view of a position of the bearing cup and the cone of the self-aligning bearing assembly in accordance with the present invention;
Fig. 5 is an enlarged schematic view of the bearing cup of the self-aligning bearing assembly in accordance with the present invention;
Fig. 6 is a schematic view of the self- alignment of the bearing cup of the self-aligning bearing assembly in accordance with the present invention;
Fig. 7 is a cross sectional view of the self-aligning bearing assembly used in a bottom bracket of a bicycle;
Fig. 8 is a cross sectional view of the self-aligning bearing assembly used in a pedal of a bicycle;
Fig. 9 is a side view in partial cross section of a conventional bearing assembly used in a hub of a bicycle, showing its bearing cup integrally formed within a hub ;
Fig. 10 is a side view in partial cross section of another conventional bearing assembly used in a hub of a bicycle, showing its bearing cup formed separately from the hub ;

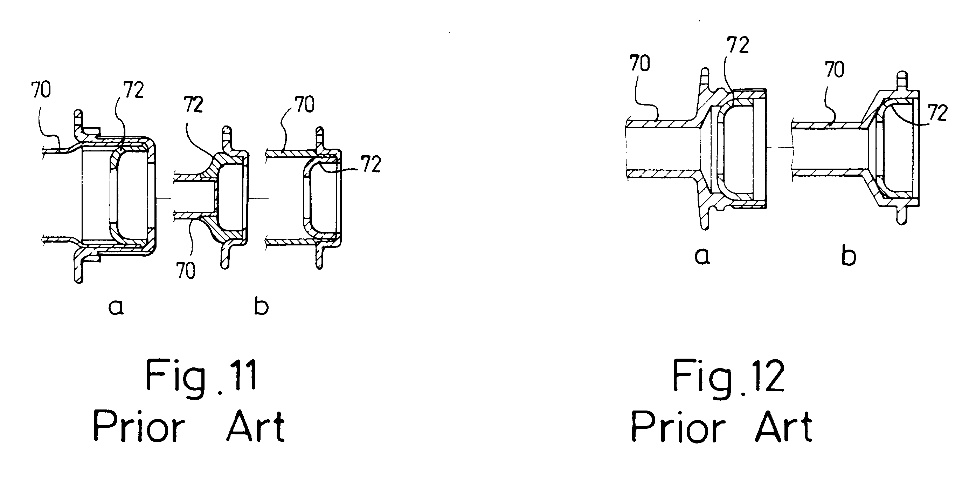

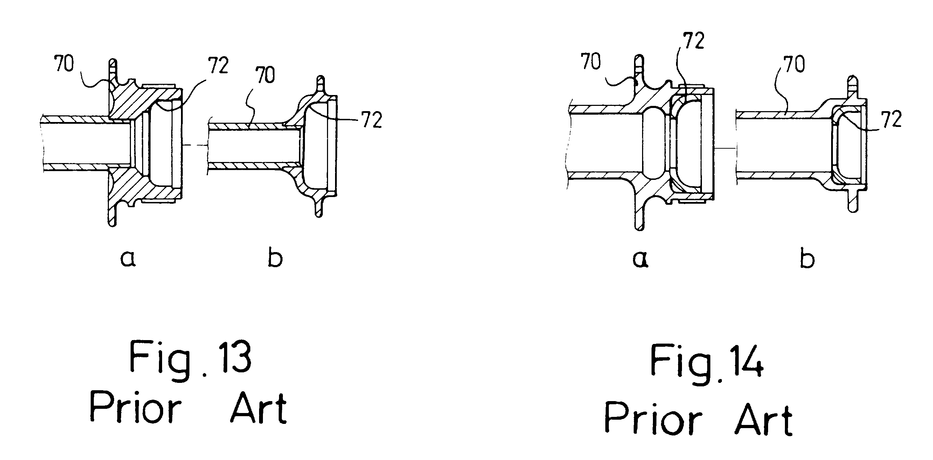

Figs. 11 to 14 are cross sectional views of various conventional bearing cups of the bearing assembly of bicycles;
Fig. 15 shows schematic views of different mis-alignment statuses of the opposed bearing cups of the conventional bearing assemblies of bicycles.

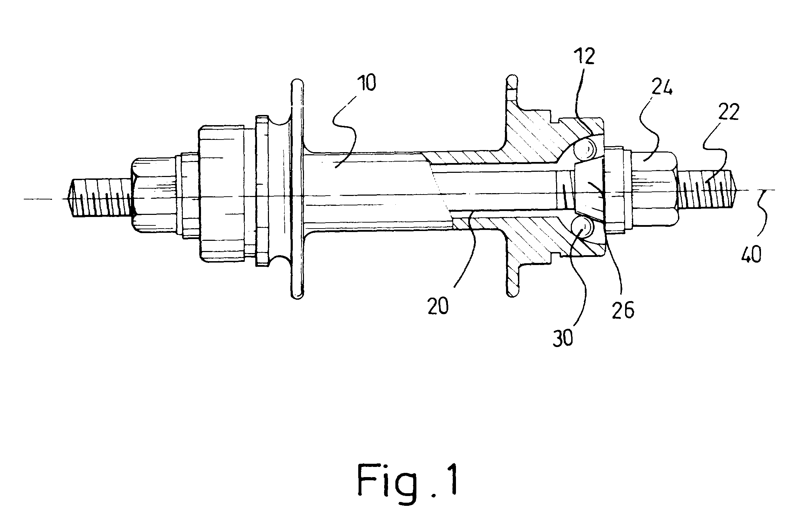

Figure 1 shows a self-aligning bearing assembly of the present invention in a first embodiment as a bicycle wheel hub. A wheel hub assembly includes a hub (10a) a bore defined in the hub (10a), an axle (20a), and two identical bearing units each comprising a bearing cup (12a) with an arcuate inner face, a set of ball bearings (30a), a cone (26a), a lock nut, and an axle nut (24a). As the wheel hub assembly has two identical ends, only one end will be described in detail here. The axle (20a) has two threaded ends (22b), and extends through the bore. The bearing cup (12a) is integrally defined in a respective end of the hub (10a) and communicates with the bore.

The set of ball bearings (30a) is received in the bearing cup (12a). The cone (26a) is screwed onto a respective one of the threaded ends (22b) of the axle (20a) whereby the ball bearings (30a) are rotatably retained between the bearing cup (12a) and the cone (26a). The lock nut is screwed onto the axle (22a) and urges against the cone (26a), whereby the lock nut and the cone (26a) are secured at a desired position to ensure a smooth rotation of the hub (10a) on the axle (20a). The axle nut (24a) is screwed onto the axle (20a) whereby a portion of the bicycle frame (not shown) is clamped between the lock nut and the axle nut (24a).

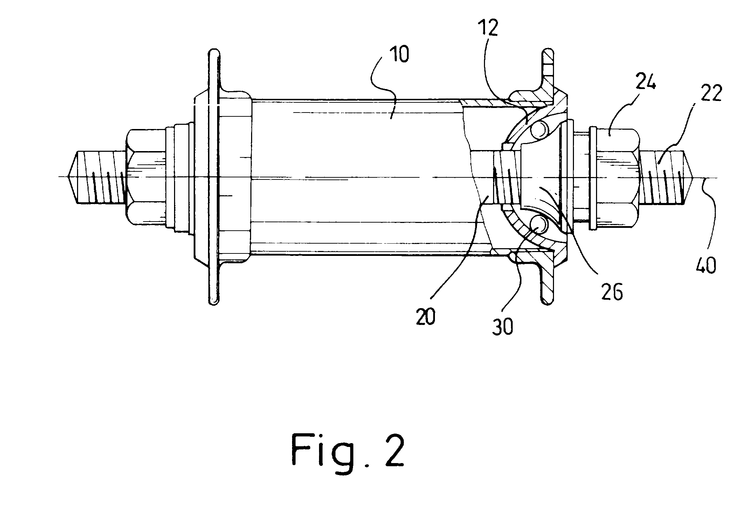

Figure 2 shows a wheel hub assembly similar to that of Figure 1 except for two bearing cups (12b) which are separate components fitted to a bore of a hub (10b). The wheel hub assembly further includes an axle (20b) with two threaded ends (22b), two cones (26b) screwed on respective threaded ends (22b) of the axle (20b), two sets of ball bearings (30b) respectively and rotatably retained between matched pairs of the bearing cups (12b) and the cones (26b), two lock nuts respectively urging against the cones (26b), and two axle nuts (24b).

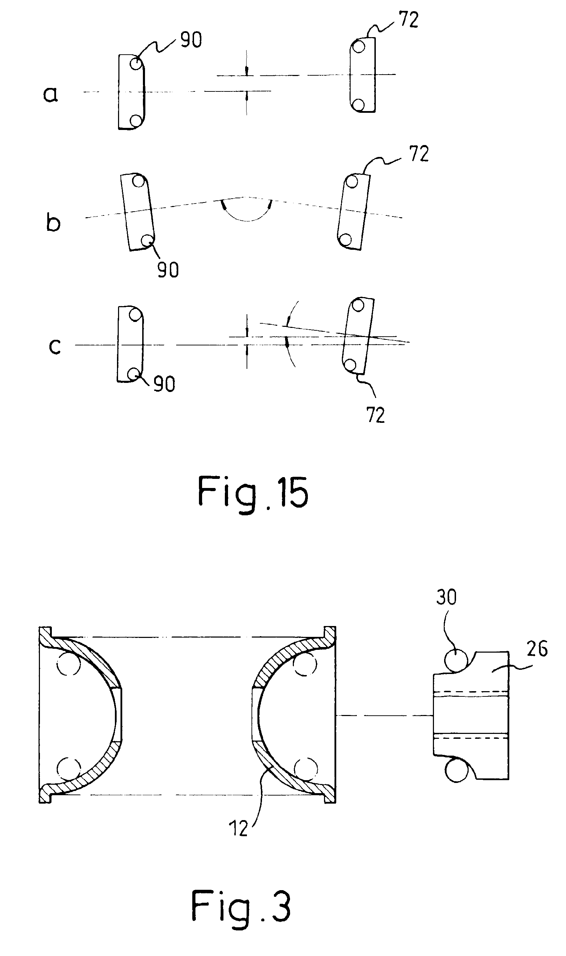

Figure 3 illustrates the arcuate inner face of the bearing cup (12).

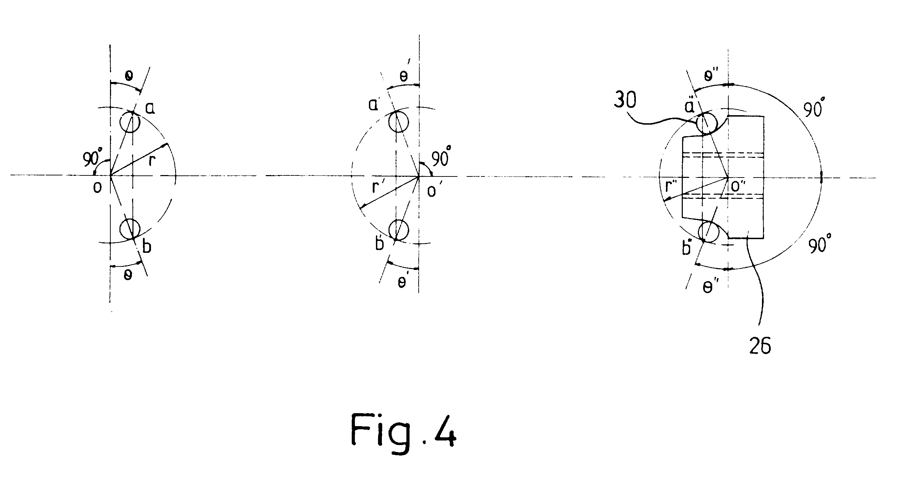

Figure 4 illustrates the geometric theory concerning the two bearing cups represented by the left side and middle diagrams, and the cone represented by the right side diagram, wherein r = radius of the inner face of the bearing cup, and Q = the contact angle between the ball and the inner surface of the cup. Q is between 20' -30' because when Q excedes 30', pressure on the ball causes excessive wear and shortens the life of the bearing. Assuming radii r, r', and r" are the same length, triangles o,a,b, o',a',b', and o",a", b", are equal.

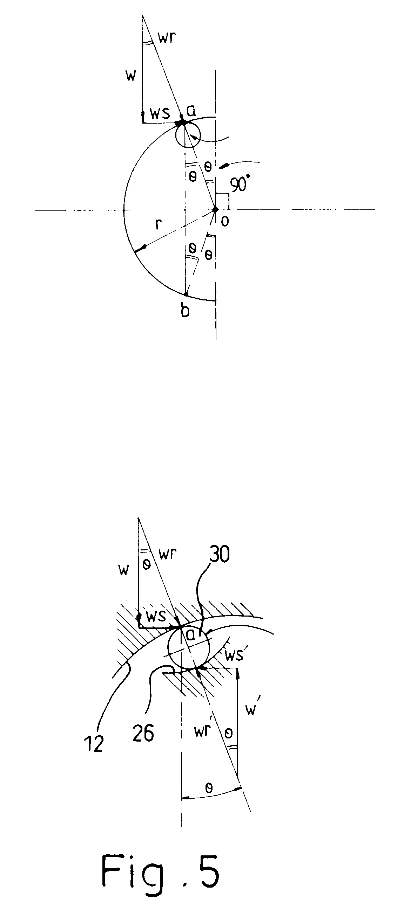

In Figure 5, the formula shows the pressure on the ball and the cone, wherein wr = w/Cos Q, which indicates pressure on the cone, and ws represents axial pressure within the hub assembly. When a load on each ball bearing is 2W, the tangential load applied to one contact point of the ball equals W.

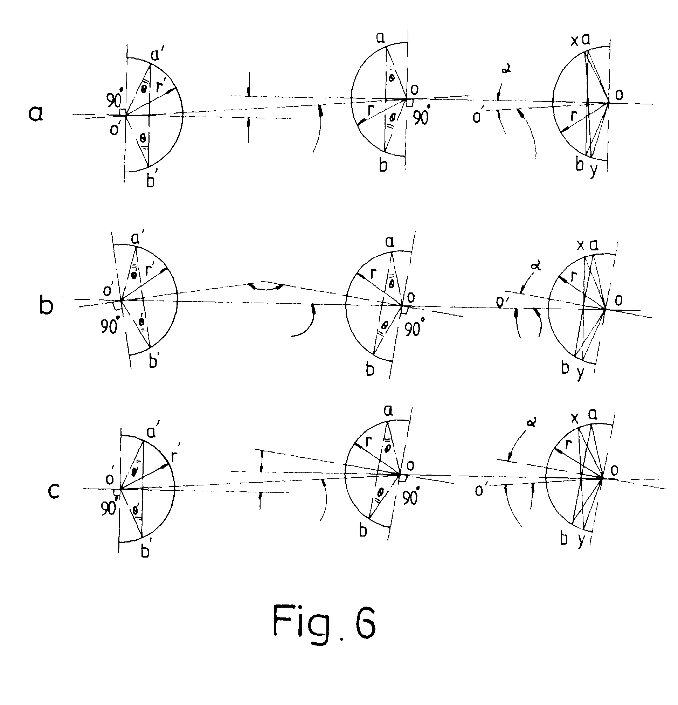

Referring to Fig. 6 ,a,b,c, misalignment of axes of two opposes bearing cups, and non-parallelend faces of bearing cups are neutralized by the present invention.

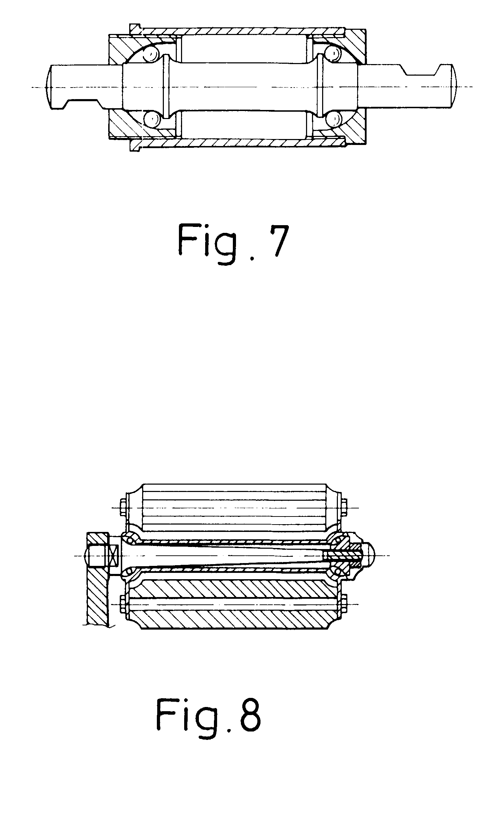

Figure 7 shows a further embodiment of the present invention wherein two bearing cups, an axle, and two sets of ball bearings are assembled in a bottom bracket of a bicycle.
Figure 8 shows a further embodiment of the present invention wherein two bearing cups, an axle, two sets of ball bearings, and a clamp nut are assembled on a bicycle pedal.

It is to be understood, however, that even though numerous characteristics and advantages of the present invention have been set forth in the foregoing description, together with details of the structure and function of the invention, the disclosure is illustrative only, and changes may be made in detail, especially in matters of size and shape and arrangement of parts within the principles of the invention to the full extent indicated by the broad general meaning of the terms in which the appended claims are expressed.

## Claims

1. A self-aligning bearing assembly for a bicycle, comprising:
an axle extending through a bore;
two bearing members each with an arcuate inner face and disposed at opposite ends of and in communication with the bore;
two bearing means respectively disposed around the axle and in a corresponding one of the two bearing members; and
two pressing members securely fitted to the axle and respectively urging against a corresponding one of the two bearing means, whereby the axle is retained in a self-aligning mode.

2. The self-aligning bearing assembly for a bicycle, as claimed in claim 1. wherein the bearing members are cups.

3. The self-aligning bearing assembly for a bicycle, as claimed in claim 1, wherein the pressing members are cones.

4. The self-aligning bearing assembly for a bicycle, as claimed in claim 1, wherein the pressing members are lock nuts.

5. The self-aligning bearing assembly for a bicycle, as claimed in claim 1, wherein the axle, the bearing members, the bearing means, and the pressing members are disposed in a bottom bracket of the bicycle.

6. The self-aligning bearing assembly for a bicycle, as claimed in claim 1, wherein the axle, the bearing members, the bearing means, and the pressing members are disposed in a wheel hub of the bicycle.

7. The self-aligning bearing assembly for a bicycle, as claimed in claim 1 wherein the axle, the bearing members, the bearing mans, and the pressing members are disposed in a pedal of the bicycle.

## Amended claims

### Amended claims in accordance with Rule 86(2) EPC.

**1.** A self-aligning bearing assembly for a bicycle, comprising;
an axle (20) extending through a bore;
two bearing cups (12) each with an arcuate inner face and being a mirror image to each other so as to form a bowl;
two bearing means (30) respectively disposed around the axle (20) and each rotatably and movably received in one of the two bearing cups (20); and
two conical pressing members (26) securely fitted to the axle (20) and respectively urging against a corresponding one of the two bearing means (30) onto the axle (20) with two oppositely formed arcuate side faces,
wherein each of the conical pressing members (26) is received in the corresponding bowl with the arcuate side faces oppositely encountering the arcuate inner faces of the bearing cups (12),
whereby the two bearing means (30) are able to adjust their positions according to the load applied onto the bearing means (30).
